# EUROPÄISCHE PATENTSCHRIFT

(11) **EP 2 586 671 B1**
(45) Veröffentlichungstag und Bekanntmachung des Hinweises auf die Patenterteilung: **22.04.2015**
(21) Anmeldenummer: 12006742.6
(22) Anmeldetag: 27.09.2012
(51) Int. Cl.: B60T 13/68, B60T 13/74, F16D 55/228

(54) **Festsattelbremse mit elektrischer Parkbremse**
Fixed calliper brake with electric parking brake
Frein à étrier fixe avec frein de stationnement électrique

(30) Priorität: 29.10.2011 DE 102011117437
(43) Veröffentlichungstag der Anmeldung: 01.05.2013
(73) Patentinhaber: Audi AG, 85045 Ingolstadt (DE)
(72) Erfinder: Kruse, Sebastian, 85055 Ingolstadt (DE)

(56) Entgegenhaltungen:
- DE-A1- 4 435 153
- DE-C1- 19 858 975

## Beschreibung

Die Erfindung betrifft eine Festsattelbremse gemäß der im Oberbegriff des Patentanspruches 1 angegebenen Art.

Bei einer herkömmlichen Schwimmsattelbremse mit einer integrierten elektronischen Parkbremse wird der Kolben des Schwimmsattels gegen den Belag gedrückt, sodass die Parkbremse schließt.

Eine Festsattelbremse ist in aller Regel eine Mehrkolbenbremse. Es ist also auf jeder Seite mehr als ein Kolben vorhanden. In der Regel ist es bei einer Festsattelbremse nicht möglich, eine elektronische Parkbremse wie bei einer Schwimmsattelbremse vorzusehen, da die Beläge bei der Festsattelbremse von beiden Seiten her gegen die Bremsscheibe gedrückt werden müssen. Daher gibt es für Festsattelbremsen in der Regel bisher keine integrierte elektronische Parkbremse. Hier wird entweder eine zusätzliche, modulare, elektronische Schwimmsattel-Parkbremse oder eine Trommelbremse vorgesehen.

Die DE 44 35 153 offenbart eine Demobilisierungseinrichtung für ein Fahrzeug mit hydraulischer Bremsanlage, die einen Hauptbremszylinder sowie mindestens eine Bremsleitung zu mindestens einem Radbremszylinder und ein Umschaltventil in der Bremsleitung aufweist, das die Bremsleitung bei betätigtem Umschaltventil absperrt. Zudem sind eine mittels eines Motors antreibbare Hydropumpe zum Beaufschlagen des mindestens einen Radbremszylinders mit Druck bei geschlossenem Umschaltventil und ein Steuergerät zum Betätigen des Umschaltventils und zum Einschalten des Motors vorgesehen. Es ist Aufgabe der Erfindung eine Festsattelbremse mit integrierter elektronischer Parkbremse bereit zu stellen.

Hierzu weist die Festsattelbremse ein Absperrventil in einer Zuleitung von dem Bremskraftverstärker zu dem Hydraulikreservoir, ein Steuergerät zur Ansteuerung des Absperrventils, und eine Einrichtung zur Einrichtung zur Druckbeaufschlagung des Hydraulikreservoirs einen elektrischen Aktuator aufweist, durch den ein Kolben im Hydraulikreservoir zurückzuziehen ist.

Bei der erfindungsgemäßen Festsattelbremse wird somit das Hydrauliksystem im Stillstand per Ventil geschlossen und Druck wird aufgebaut, um durch die Kolben die Bremsbeläge an die Bremsscheibe zu drücken. Somit ist die elektronische Parkbremsenfunktion für die Festsattelbremse sichergestellt. Durch die Erfindung ist die Integration der elektronischen Parkbremse in eine Festsattelbremse möglich, und die Festsattelbremse muss weder als Trommelbremse noch über einen zusätzlichen Sattel ausgeführt werden.

Eine vorteilhafte Ausgestaltung der erfindungsgemäßen Festsattelbremse ist dadurch gekennzeichnet, dass das Absperrventil ein Rückschlagventil ist. Diese Ausführung ermöglicht eine rein mechanische, stromlos sperrende Sicherstellung der Zuspannfunktion. Wenn das elektronische Parkbremse-Steuergerät das Ventil sperrt, kann entsprechend Druck über das Pedal in das System gebracht werden, der erst wieder entweichen kann, wenn das elektronische Parkbremse-Steuergerät das Rückschlagventil ansteuert und somit öffnet.

Bei dieser Ausführungsform kann in vorteilhafter Weise der Druckaufbau bei geschlossenem Absperrventil durch Betätigung des Bremspedals über den Bremskraftverstärker oder durch eine zwischen dem Bremskraftverstärker und dem Absperrventil vorgesehene ESP-Pumpe des elektronischen Stabilitätsprograms (ESP) erfolgen. Wobei es weiterhin vorteilhaft ist, wenn die ESP-Pumpe über das Steuergerät zur Ansteuerung des Absperrventils angesteuert wird. Somit kann der Druck über die ESP-Pumpe oder mechanisch über das Pedal immer auf den erforderlichen Wert erhört werden.

Eine weitere vorteilhafte Ausgestaltung der erfindungsgemäßen Festsattelbremse ist dadurch gekennzeichnet, dass der Aktuator einen durch das Steuergerät anzusteuernden Elektromotor aufweist, der mit dem zurückzuziehenden Kolben über eine Spindel verbunden ist.

Wird vorteilhafte Ausgestaltung der erfindungsgemäßen Festsattelbremse die elektronische Parkbremse betätigt, sperrt das Steuergerät der elektronischen Parkbremse zunächst das Rückschlagventil. Somit ist der Hydraulikkreis in dem Bremssystem geschlossen. Nun wird wiederum von dem Steuergerät der Motor der elektrischen Parkbremse angesteuert, der über eine Spindel den rückstellbaren Kolben zurückzieht. Somit wird der Druck im System erhöht bis die Beläge anliegen und eine ausreichende Zuspannung erfolgt ist.

Eine weitere vorteilhafte Ausgestaltung der erfindungsgemäßen Festsattelbremse ist dadurch gekennzeichnet, dass die Spindel bei Erreichen eines vorgegebenen Drucks in dem Hydraulikreservoir selbsthemmend ist. Dadurch wird in vorteilhafter Weise die mechanische, stromlos sperrende Zuspannfunktion weiter verbessert, wenn die Spindel bei ausreichendem Druck selbstgehemmt ist.

Eine herkömmliche Festsattelbremse sowie Ausführungsbeispiele der erfindungsgemäßen Festsattelbremse werden nun anhand der beiliegenden Zeichnungen beschrieben.

In der Beschreibung, in den Ansprüchen und in der Zeichnung werden die in der unten aufgeführten Liste der Bezugzeichen verwendeten Begriffe und zugeordneten Bezugzeichen verwendet. In der Zeichnung bedeutet:
- Fig. 1: eine herkömmliche Festsattelbremse in dem geöffneten Zustand;
- Fig. 2: eine herkömmliche Festsattelbremse in dem zugespannten Zustand;
- Fig. 3: ein Ausführungsbeispiel einer erfindungsgemäßen Festsattelbremse mit integrierter Parkbremse.

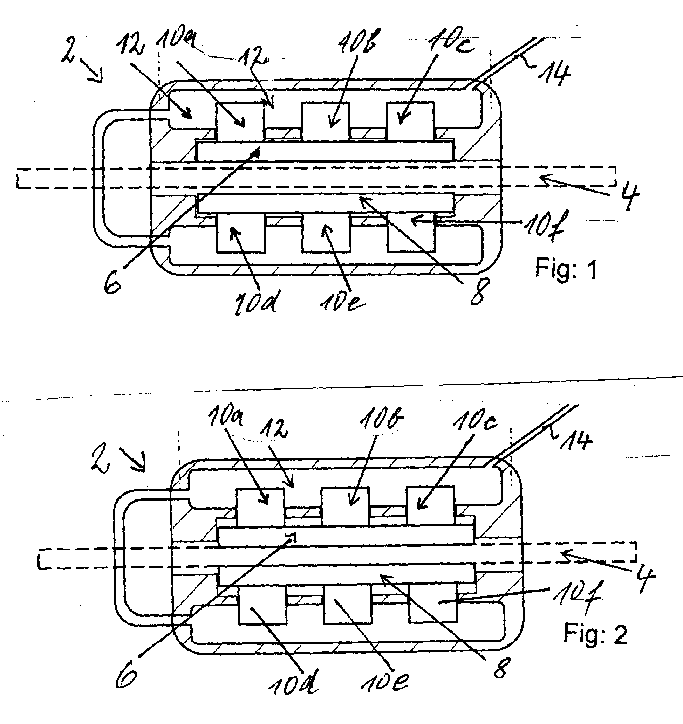

Die Figuren 1 und 2 zeigen eine herkömmliche Festsattelbremse 2 im geöffneten beziehungsweise zugespannten Zustand. Die Festsattelbremse 2 umfasst eine Bremsscheibe 4 und beidseitig an der Bremsscheibe 4 angeordnete Bremsbeläge 6, 8 sowie sechs Kolben 10a, 10b, 10c, 10d, 10e, 10f, die bei Bremsbetätigung durch ein Bremspedal (nicht gezeigt) über einen Bremskraftverstärker durch Druckaufbau in einem Hydraulikreservoir 12 gegen die Bremsscheibe zuzuspannen sind. Das Hydraulikreservoir 12 wird durch eine Zuleitung 14 gespeist, die von dem Bremskraftverstärker (in Figuren 1 und 2 nicht gezeigt) kommt.

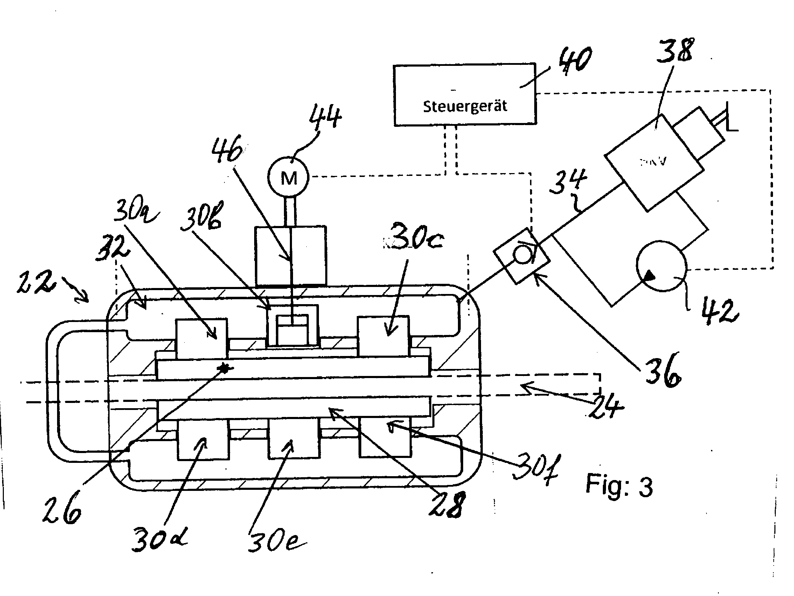

Figur 3 zeigt eine Festsattelbremse 22 der vorstehend beschriebenen Art, die mit einer Parkbremse nach Ausführungsbeispielen der Erfindung ausgestattet ist.

Nach einem Ausführungsbeispiel der Erfindung umfasst die Festsattelbremse 22 eine Bremsscheibe 24, zwei Bremsbeläge 26, 28, Kolben 30a, 30b, 30c, 30d, 30e, 30f, die in einem Hydraulikreservoir 32 gelagert sind und bei einem Druckaufbau in dem Hydraulikreservoir 32 gegen die Bremsbeläge 26, 28 gespeist, in der ein Absperrventil 36 vorgesehen ist, das als Rückschlagventil ausgebildet ist.

Bei dem in Fig. 3 gezeigten, ersten Ausführungsbeispiel der Erfindung umfasst die Parkbremse ein Absperrventil 36 in der Zuleitung 34 von dem Bremskraftverstärker 38 zu dem Hydraulikreservoir 32. Ein Steuergerät 40 ist zur Ansteuerung des Absperrventils 36 vorgesehen. Bei diesem Ausführungsbeispiel der Erfindung erfolgt die Zuspannung der Parkbremse dadurch, dass die Parkbremse betätigt wird, worauf das Steuergerät 40 das Absperrventil 36 schließt und durch Betätigen des Bremspedals über den Bremskraftverstärker 38 Druck in den Hydraulikreservoir 32 aufgebaut wird, der so lange erhalten bleibt, bis das Steuergerät 40 das Absperrventil 36 wieder öffnet.

Bei einer weiteren Ausgestaltung der Erfindung ist zwischen dem Bremskraftverstärker 38 und dem Absperrventil 36 eine ESP-Pumpe 42 des elektronischen Stabilitätsprograms (ESP) vorgesehen, die unter der Steuerung des Steuergeräts 40 zum Druckaufbau in dem Hydraulikreservoir 32 bestimmt ist. Der Druck in dem Hydraulikreservoir 32 kann somit nicht nur durch das Bremspedal sondern auch durch die ESP-Pumpe aufgebaut werden.

Nach einem weiteren Ausführungsbeispiel der Erfindung ist das Steuergerät 40 mit einem Elektromotor 44, welcher den erfindungsgemässen Aktuator darstellt, verbunden, der über eine Spindel 46 mit einem der Kolben, beispielsweise den Kolben 30b, verbunden ist und von der zugespannten Stellung (siehe Kolben 10b in Fig. 2) in das Hydraulikreservoir 32 zurückgezogen werden kann. Wenn die Parkbremse betätigt worden ist und das Steuergerät 40 das Absperrventil 36 geschlossen hat, wird durch Zurückziehen des Kolbens 30b zusätzlicher Druck in dem Hydraulikreservoir 32 aufgebaut, wodurch die restlichen Kolben 30a, 30c, 30d, 30e, 30f die Bremsbeläge 26, 28 beaufschlagen und die Parkbremse in den zugespannten Zustand bringen.

Bei diesem Ausführungsbeispiel kann der Druckaufbau über die ESP-Pumpe zusätzlich verstärkt werden. Andererseits ist eine Mitwirkung des Fahrers beispielsweise durch die Betätigung des Bremspedals, nicht mehr erforderlich, da ein Aktuator bestehend aus dem durch das Steuergerät 40 angesteuerten Elektromotor 44, der mit dem zurückziehbaren Kolben 30b über die Spindel 46 verbunden ist, diese Aufgabe übernimmt. Dabei ist vorteilhaft, wenn die Spindel 46 bei Erreichen eines vorgegebenen Drucks in dem Hydraulikreservoir 32 selbsthemmend ist, was zur Sicherheit der Parkbremse beiträgt.

### Bezugszeichenliste

- 2: Festsattelbremse
- 4: Bremsscheibe
- 6: Bremsbelag
- 8: Bremsbelag
- 10a bis 10f: Kolben
- 12: Hydraulikreservoir
- 14: Zuleitung

- 22: Festsattelbremse
- 24: Bremsscheibe
- 26: Bremsbelag
- 28: Bremsbelag
- 30a bis 30f: Kolben
- 32: Hydraulikreservoir
- 34: Zuleitung
- 36: Absperrventil
- 38: Bremskraftverstärker
- 40: Steuergerät
- 42: ESP-Pumpe
- 44: Elektromotor
- 46: Spindel

## Patentansprüche

1. Festsattelbremse (22) mit einer Bremsscheibe (24) und beidseitig von der Bremsscheibe (24) angeordneten Bremsbelägen (26, 28), umfassend
- wenigstens zwei, gegen die Bremsscheibe (24) wirkende Kolben (30a, 30b, 30c, 30d, 30e, 30f), die bei Bremsbetätigung durch ein Bremspedal über einen Bremskraftverstärker (38) durch Druckaufbau in einem Hydraulikreservoir (32) zuzuspannen sind,
- ein Absperrventil (36) in einer Zuleitung von dem Bremskraftverstärker zu dem Hydraulikreservoir (32),
- ein Steuergerät (40) zur Ansteuerung des Absperrventils (36), und
- eine Einrichtung zur Druckbeaufschlagung des Hydraulikreservoirs (32) bei geschlossenem Absperrventil (36),
**dadurch gekennzeichnet,**
**dass** die Einrichtung zur Druckbeaufschlagung des Hydraulikreservoirs einen elektrischen Aktuator (46) aufweist, durch den einer der Kolben (30b) in dem Hydraulikreservoir (32) zurückzuziehen ist, wobei durch das Zurückziehen des Kolbens (30b) Druck in dem Hydraulikreservoir (32) aufgebaut wird, wodurch die restlichen Kolben (30a, 30c, 30d, 30f) die Bremsbeläge (26, 28) beaufschlagen und die Festsattelbremse (22) in zugespannten Zustand bringen.

2. Festsattelbremse (22) nach Anspruch 1, **dadurch gekennzeichnet, dass** das Absperrventil (36) ein Rückschlagventil ist.

3. Festsattelbremse (22) nach Anspruch 1 oder 2, **dadurch gekennzeichnet, dass** zwischen dem Bremskraftverstärker (38) und dem Absperrventil (36) eine ESP-Pumpe (42) vorgesehen ist.

4. Festsattelbremse (22) nach Anspruch 3, **dadurch gekennzeichnet, dass** die ESP-Pumpe (42) über das Steuergerät (40) zur Ansteuerung des Absperrventils (36) anzusteuern ist.

5. Festsattelbremse (22) nach einem der vorgenannten Ansprüche, **dadurch gekennzeichnet, dass** der Aktuator einen durch das Steuergerät (40) anzusteuernden Elektromotor (44) aufweist, der mit dem zurückzuziehenden Kolben (30b) durch eine Spindel (46) verbunden ist.

6. Festsattelbremse (22) nach Anspruch 5, **dadurch gekennzeichnet, dass** die Spindel (46) bei Erreichen eines vorgegebenen Drucks in dem Hydraulikreservoir (32) selbsthemmend ist.

## Claims

1. Fixed calliper brake (22) having a brake disc (24) and brake linings (26, 28) arranged on both sides of the brake disc (24), comprising
- at least two pistons (30a, 30b, 30c, 30d, 30e, 30f) acting against the brake disc (24), which are to be clamped shut by the build-up of pressure in a hydraulic reservoir (32) when the brakes are actuated by means of a brake pedal via a brake servo (38),
- a shut-off valve (36) in a line from the brake servo to the hydraulic reservoir (32),
- a control device (40) for actuating the shut-off valve (36), and
- a device for applying pressure to the hydraulic reservoir (32) when the shut-off valve (36) is closed,
**characterised in that**
the device for applying pressure (30b) to the hydraulic reservoir (32) comprises an electric actuator by means of which one of the pistons (30b) in the hydraulic reservoir (32) is to be retracted, as a result of which the remaining pistons (30a, 30c, 30d, 30f) act on the brake linings (26, 28) and bring the fixed calliper brake (22) into the clamped shut state.

2. Fixed calliper brake (22) according to claim 1, **characterised in that** the shut-off valve (36) is a non-return valve.

3. Fixed calliper brake (22) according to claim 1 or 2, **characterised in that** an ESP pump (42) is provided between the brake servo (38) and the shut-off valve (36).

4. Fixed calliper brake (22) according to claim 3, **characterised in that** the ESP pump (42) is to be actuated by means of the control device (40) for actuating the shut-off valve (36).

5. Fixed calliper brake (22) according to one of the preceding claims, **characterised in that** the actuator comprises an electric motor (44) which is to be actuated by the control device (40), said motor (44) being connected by a spindle (46) to the piston (30b) that is to be retracted.

6. Fixed calliper brake (22) according to claim 5, **characterised in that** the spindle (46) is self-limiting when a pre-defined pressure is reached in the hydraulic reservoir (32).

## Revendications

1. Frein à étrier fixe (22) avec un disque de frein (24) et des garnitures de frein (26, 28) aménagées des deux côtés du disque de frein (24), comprenant :
- au moins deux pistons (30a, 30b, 30c, 30d, 30e, 30f) agissant contre le disque de frein (24), qui doivent, lors de la commande du frein par une pédale de frein via un servofrein (38), être engagés par montée en pression dans un réservoir hydraulique (32),
- une soupape d'arrêt (36) disposée dans un conduit d'alimentation allant du servofrein au réservoir hydraulique (32),
- un appareil de commande (40) pour commander la soupape d'arrêt (36) et
- un dispositif de mise en pression du réservoir hydraulique (32) lorsque la soupape d'arrêt (36) est fermée,
**caractérisé en ce que** :
le dispositif de mise en pression du réservoir hydraulique présente un actionneur électrique (46) par lequel l'un des pistons (30b) doit être rétracté dans le réservoir hydraulique (32), dans lequel le retrait du piston (30b) entraîne une montée en pression dans le réservoir hydraulique (32), si bien que les pistons restants (30a, 30c, 30d, 30f) sollicitent les garnitures de frein (26, 28) et amènent le frein à étrier fixe (22) à l'état engagé.

2. Frein à étrier fixe (22) selon la revendication 1, **caractérisé en ce que** la soupape d'arrêt (36) est une soupape de retenue.

3. Frein à étrier fixe (22) selon la revendication 1 ou la revendication 2, **caractérisé en ce qu'**il est prévu entre le servofrein (38) et la soupape d'arrêt (36) une pompe ESP (42).

4. Frein à étrier fixe (22) selon la revendication 3, **caractérisé en ce que** la pompe ESP (42) doit être commandée via l'appareil de commande (40) pour commander la soupape d'arrêt (36).

5. Frein à étrier fixe (22) selon l'une quelconque des revendications précédentes, **caractérisé en ce que** l'actionneur présente un moteur d'électrique (44) à commander par l'appareil de commande (40), lequel moteur est connecté au piston à rétracter (30b) par une broche (46).

6. Frein à étrier fixe (22) selon la revendication 5, **caractérisé en ce que** la broche (46) est autobloquante lorsqu'une pression prédéterminée est atteinte dans le réservoir hydraulique (32).
